# EUROPÄISCHE PATENTANMELDUNG

(11) **EP 1 652 758 A2**
(43) Veröffentlichungstag der Anmeldung: **03.05.2006**
(21) Anmeldenummer: 05011975.9
(22) Anmeldetag: 03.06.2005
(51) Int. Cl.: B62D 25/16, B62D 21/15, B62D 29/04

(54) **Anordnung zum Befestigen eines Bauteils**

(30) Priorität: 29.10.2004 DE 102004052637
(71) Anmelder: REHAU AG + Co, 95111 Rehau (DE)
(72) Erfinder: Mett, Thomas, 95182 Döhlau (DE); Herrmann, Stefan, 95111 Rehau (DE); Vogel, Matthias, 95233 Helmbrechts (DE)

(57) **Zusammenfassung**

Die Erfindung betrifft eine Anordnung zum Befestigen eines Bauteils, umfassend:
ein Trägerelement (8) und ein fest mit dem Trägerelement verbundenes Halteelement (1), zumindest einen Abstandshalter (3), durch den das Trägerelement und das Halteelement voneinander beabstandet sind, wobei das Bauteil beweglich zwischen dem Trägerelement und dem Halteelement angeordnet ist und durch eine Führungseinrichtung in einer Führungsebene geführt wird, und wobei die Führungseinrichtung wenigstens einen Eingriffsabschnitt (2) und wenigstens einen Aufnahmeabschnitt (7) aufweist, die miteinander in Eingriff stehen. Um die Nachteile einer herkömmlichen Befestigungsanordnung zu verbessern und eine verbesserte Befestigungsanordnung bereitzustellen, ist erfindungsgemäß vorgesehen, dass der Eingriffsabschnitt nachgiebig ist und durch gezielte Krafteinwirkung in der Führungsebene mit dem Aufnahmeabschnitt reversibel außer Eingriff bringbar ist.

## Beschreibung

Die Erfindung betrifft eine Anordnung zum Befestigen eines Bauteils, umfassend: ein Trägerelement und ein fest mit dem Trägerelement verbundenes Halteelement, zumindest einen Abstandshalter, durch den das Trägerelement und das Halteelement voneinander beabstandet sind, wobei das Bauteil beweglich zwischen dem Trägerelement und dem Halteelement angeordnet ist und durch zumindest eine Führungseinrichtung in einer Führungsebene geführt wird, und wobei die Führungseinrichtung wenigstens einen Eingriffsabschnitt und wenigstens einen Aufnahmeabschnitt umfasst, die miteinander in Eingriff stehen.

Eine gattungsgemäße Befestigungsanordnung, insbesondere ein Befestigungselement mit Versagenseigenschaften, wird in der EP 1072502 B1 beschrieben. Das Befestigungselement besteht aus zwei separaten Teilen, welche vor der Montage zuerst miteinander verbunden werden müssen. Der eine Teil dient dabei zur Befestigung an einem Trägerelement, während der andere Teil das Bauteil festhält und gleitend führt. Die Verbindung der beiden Teile erfolgt über vier Stifte, welche per Drehbewegung eine Verrastung herstellen. Die vier Stifte bilden dabei die Sollbruchstelle zwischen den zwei Bauteilen. Danach wird das vormontierte Befestigungselement in eine Öffnung des Bauteils eingesetzt und eingerastet, und durch die Öffnung des Bauteils mit dem Trägerelement verschraubt. Im Schadensfall scheren die Stifte ab und das Bauteil kann aus der Fixierung ausklinken. Ein derartiges Befestigungselement wird vor allem im Automobilbereich eingesetzt, um Teile der Fahrzeugverkleidung an der Karosserie zu befestigen. Im Schadensfall wird das Teil der Fahrzeugverkleidung durch das Versagen des Befestigungselements von der Karosserie abgetrennt und kann wiederverwendet werden.

Bei dieser herkömmlichen Befestigungsanordnung ist das Befestigungselement nach dem Abscheren der Stifte für einen weiteren Gebrauch jedoch nicht mehr einsetzbar. So muss zum erneuten Befestigen des Bauteils ein neues Befestigungselement verwendet und eingebaut werden. Im Schadensfall geht der gesamte obere Teil des Befestigungselements, der das Bauteil hält und führt, verloren. Der mehrteilige Aufbau des Befestigungselements verursacht hohe Herstellungskosten und einen hohen Montageaufwand, da die einzelnen Bestandteile erst vorzumontieren sind.

Bei der bekannten, gattungsgemäßen Befestigungsanordnung ist zudem je Befestigungspunkt des Bauteils ein separates Befestigungselement erforderlich. Ferner ist der Toleranzausgleich bei der montierten Befestigungsanordnung stark eingeschränkt und kann allenfalls durch erhöhtes Spiel in der Gleitführung stattfinden, was jedoch in der Praxis nicht erwünscht ist. Des weiteren erfordert die herkömmliche Lösung eine filigrane Geometrie am zu befestigenden Bauteil, in Form der Lochbildgeometrie mit Ausklinkungen.

Der Erfindung liegt die Aufgabe zugrunde, die aus dem Stand der Technik bekannten Nachteile zu beseitigen und eine dahingehend verbesserte Anordnung zum Befestigen eines Bauteils bereitzustellen.

Diese Aufgabe wird gelöst durch eine Anordnung zum Befestigen eines Bauteils der eingangs genannten Art, bei der erfindungsgemäß vorgesehen ist, dass der Eingriffsabschnitt nachgiebig ist und durch gezielte Krafteinwirkung in der Führungsebene mit dem Aufnahmeabschnitt reversibel außer Eingriff bringbar ist. Bei erhöhter Krafteinwirkung in der Führungsebene, z.B. bei einem Fahrzeugcrash, springt das Bauteil unbeschädigt aus der Führung zwischen dem Trägerelement und dem Halteelement. Da der Eingriffsabschnitt der Führungseinrichtung nachgiebig ist, erleidet auch die Führungseinrichtung keinen Schaden und ist wiederverwendbar. Um das aus der Führung gesprungene Bauteil erneut zwischen dem Trägerelement und dem Halteelement zu befestigen, muss die Führungseinrichtung nicht ausgetauscht werden. Das Wiedereinsetzen des Bauteils ist ohne großen Montageaufwand möglich, und erfordert lediglich, dass der Eingriffsabschnitt und der Aufnahmeabschnitt der Führungseinrichtung wieder in Eingriff gebracht werden. Die erfindungsgemäße Befestigungsanordnung ist einfach und preisgünstig herzustellen und ist, wie beschrieben, mit geringem Aufwand montierbar. Im Vergleich zum Stand der Technik können erhebliche Zeit und Kosten für Montage und Herstellung eingespart werden.

In einer vorteilhaften Ausführung weist die Anordnung eine Verriegelungseinrichtung auf, durch welche das Bauteil zwischen dem Trägerelement und dem Halteelement reversibel festlegbar ist. Das Bauteil wird dann im Normalfall von der Verriegelungseinrichtung in einer Neutralposition gehalten und kann zusätzlich gegenüber der Neutralposition ausgelenkt werden. Diese Anordnung wird bevorzugt, wenn ein Gleiten des Bauteils erst erwünscht ist, nachdem eine Kraft einwirkt, die groß genug ist, um die Verriegelung zu überwinden.

Es ist dabei von Vorteil, wenn die Anordnung von einem ersten Zustand, in dem das Bauteil zwischen dem Halteelement und dem Trägerelement festgelegt ist, in einen zweiten Zustand, in dem das Bauteil gegenüber dem Halteelement bzw. dem Trägerelement bewegbar ist und in zumindest einer Führungsrichtung gleitend geführt wird, reversibel überführbar ist. Im ersten Zustand der Anordnung befindet sich das Bauteil in Normal- oder Neutralposition. Erst bei Eintritt einer bestimmten Bedingung, z.B. dem Einwirken einer definierten Kraft, überwindet das Bauteil die Verriegelung und wird gleitend geführt. Diese Ausführung eignet sich insbesondere für den Automobilbereich. Ein beliebiges Teil einer Fahrzeugverkleidung kann demnach mit Bezug auf die Fahrzeugstruktur festgelegt werden. Bei Einwirkung einer definierten Kraft auf das Bauteil im normalen Fahrbetrieb wird die Verriegelung des Bauteils überwunden. Dadurch werden im Bauteil auftretende Kräfte begrenzt und die Bauteilfunktionsfähigkeit im Fahrbetrieb sichergesellt. Gleiches gilt auch für den Fall der Wärmeausdehnung.

Dabei ist es hilfreich, wenn die Anordnung durch definierte Krafteinwirkung in einer Führungsrichtung, die kleiner ist als die Kraft zum Außereingriffbringen des Eingriffsabschnitts und des Aufnahmeabschnitts, vom ersten in den zweiten Zustand überführbar ist.

Die Komplexität der Führungseinrichtung kann weiter verringert werden, wenn der Eingriffsabschnitt einstückig am Halteelement oder dem Trägerelement angeformt ist. Dies wirkt sich vorteilhaft auf die Herstellungskosten der erfindungsgemäßen Befestigungsanordnung aus.

Eine besonders sichere und zuverlässige Führung lässt sich dadurch bewerkstelligen, dass das Bauteil mit dem Halteelement und/oder dem Trägerelement formschlüssig verbunden ist.

Besonders hilfreich dazu ist es, wenn der Eingriffsabschnitt einen Vorsprung umfasst, der in eine Ausnehmung des Aufnahmeabschnitts eingreift.

Um den Eingriffsabschnitt nachgiebig zu gestalten, ist es vorteilhaft, wenn der Eingriffsabschnitt ein federndes Element, vorzugsweise eine Federzunge umfasst.

Die Federeigenschaften der Federzunge lassen sich insbesondere dann vorteilhaft nutzen, wenn sich die Federzunge im Wesentlichen in einer Führungsrichtung erstreckt.

Eine besonders einfache und kostengünstige Anordnung lässt sich dadurch verwirklichen, wenn zumindest eine Führungseinrichtung eine Verriegelungseinrichtung umfasst. Durch das Zusammenlegen der Führungs- und Verriegelungseinrichtungen kann die Anzahl der erforderlichen Bauteile bzw. deren Komplexität weiter reduziert werden. Ferner lässt sich der erforderliche Bauraum äußerst kompakt halten.

In einer vorteilhaften Ausführungsform weist die Verriegelungseinrichtung eine Rastvorrichtung auf, in welcher der Eingriffsabschnitt verrastbar ist. Der Eingriffsabschnitt ist Bestandteil der Führungseinrichtung, über die das Bauteil zwischen dem Halteelement und dem Trägerelement gleitend geführt wird. Wenn derselbe Eingriffsabschnitt in einer Rastvorrichtung verrastbar ist, kann auf einen gesonderten Verriegelungsabschnitt verzichtet werden.

Dazu ist es hilfreich, wenn der Eingriffsabschnitt im ersten Zustand der Anordnung in der Rastvorrichtung der Verriegelungseinrichtung verrastet ist, und im zweiten Zustand der Anordnung im Aufnahmeabschnitt der Führungseinrichtung in zumindest einer Führungsrichtung gleitend geführt wird.

Die Führungseinrichtung lässt sich besonders einfach gestalten, wenn der Aufnahmeabschnitt eine Nut oder ein Langloch aufweist.

Ebenso begünstigt es die Einfachheit der Anordnung, wenn die Rastvorrichtung eine Auskerbung umfasst.

Führungseinrichtung und Verriegelungseinrichtung lassen sich in vorteilhafter Weise verbinden, wenn die Auskerbung die Nut oder das Langloch unterbricht.

In einer besonders einfachen und kostengünstigen Variante der erfindungsgemäßen Anordnung umfasst das Halteelement einen länglichen und dünnwandigen Abschnitt.

Um die Stabilität der Befestigungsanordnung weiter zu erhöhen, ist das Halteelement an zumindest zwei Verbindungsstellen mit dem Trägerelement verbunden.

Weiterhin wird die Führung des Bauteils dadurch präzisiert und stabilisiert, dass zumindest zwei Führungseinrichtungen vorgesehen sind, die im Wesentlichen in einer Führungsrichtung des Bauteils voneinander beabstandet sind.

Die Stabilität der Anordnung und der Führung lässt sich insbesondere dadurch erhöhen, dass an einer Verbindungsstelle, an der das Halteelement und das Trägerelement miteinander verbunden sind, zumindest eine Führungseinrichtung vorgesehen ist, die eine Verriegelungseinrichtung umfasst. Vor allem wird dadurch verhindert, dass Schwingungen von dem Halteelement oder dem Trägerelement auf das Bauteil oder umgekehrt übertragen werden.

Um die Montagefreundlichkeit der Anordnung weiter zu verbessern ist es von Vorteil, wenn das Bauteil - wenn der Eingriffsabschnitt außer Eingriff mit dem Aufnahmeabschnitt ist - in einer Richtung im Wesentlichen senkrecht zu einer Führungsrichtung aus der Anordnung entfernbar ist.

Eine Anordnung, bei der das Halteelement einen flächigen Haltabschnitt und das Trägerelement einen flächigen Trägerabschnitt aufweisen, die durch den Abstandshalter voneinander beabstandet in etwa parallel gegenüberstehen und einen Spalt bilden, wobei ein dünnwandiger Führungsabschnitt des Bauteils in den Spalt zwischen dem Halteelement und dem Trägerabschnitt hineinragt, ist für den Einsatz im Automobilbereich besonders geeignet.

Dabei ist es von Vorteil, wenn die Führungsrichtung des Bauteils im Wesentlichen parallel zu dem Halteelement und/oder dem Trägerabschnitt verläuft. Insbesondere im Automobilbereich kann die Führungsrichtung des Bauteils dadurch im Wesentlichen der Fahrtrichtung des Fahrzeuges angeglichen werden.

Die Stabilität und Festigkeit der Führungseinrichtung des Bauteils wird dadurch verbessert, dass die Führungseinrichtung des Bauteils im Wesentlichen die Richtung ist, in der zwei Verbindungsstellen des Halteelements und des Trägerelements voneinander beabstandet sind.

Die Details und weitere Vorteile und Eigenschaften der vorliegenden Erfindung werden nachstehend mit Bezug auf die beiliegenden Zeichnungen beschrieben.
- Fig. 1a: zeigt eine Ansicht auf den Halteabschnitt des Halteelements der erfindungsgemäßen Anordnung.
- Fig. 1b: zeigt eine vergrößerte Ansicht eines Eingriffsabschnitts der erfindungsgemäßen Anordnung.
- Fig. 2a: zeigt eine Einbausituation am Bauteil als Explosionsdarstellung.
- Fig. 2b: zeigt die Rückseite des Halteelements der erfindungsgemäßen Anordnung in vergrößerter Ansicht.
- Fig. 3a: zeigt eine Unteransicht des am Halteelement anliegenden Bauteils.
- Fig. 3b: zeigt eine vergrößerte Unteransicht des am Halteelement anliegenden Bauteils.

Die erfindungsgemäße Anordnung umfasst ein Trägerelement 8 und ein fest mit dem Trägerelement 8 verbundenes Halteelement 1, und zumindest einen Abstandshalter 3, durch den das Trägerelement 8 und das Halteelement 1 voneinander beabstandet sind. Ein Bauteil 5 ist beweglich zwischen dem Trägerelement 8 und dem Halteelement 1 angeordnet und wird durch zumindest eine Führungseinrichtung in einer Führungsebene geführt. Die Führungseinrichtung umfasst einen Eingriffsabschnitt 2 und einen Aufnahmeabschnitt 7, die miteinander in Eingriff stehen. Der Eingriffsabschnitt 2 ist nachgiebig und durch gezielte Krafteinwirkung in der Führungsebene mit dem Aufnahmeabschnitt 7 reversibel außer Eingriff bringbar.

Der besseren Übersicht halber sind die Bestandteile der Anordnung in den Figuren vorwiegend einzeln und nicht im Einbauzustand gezeigt.

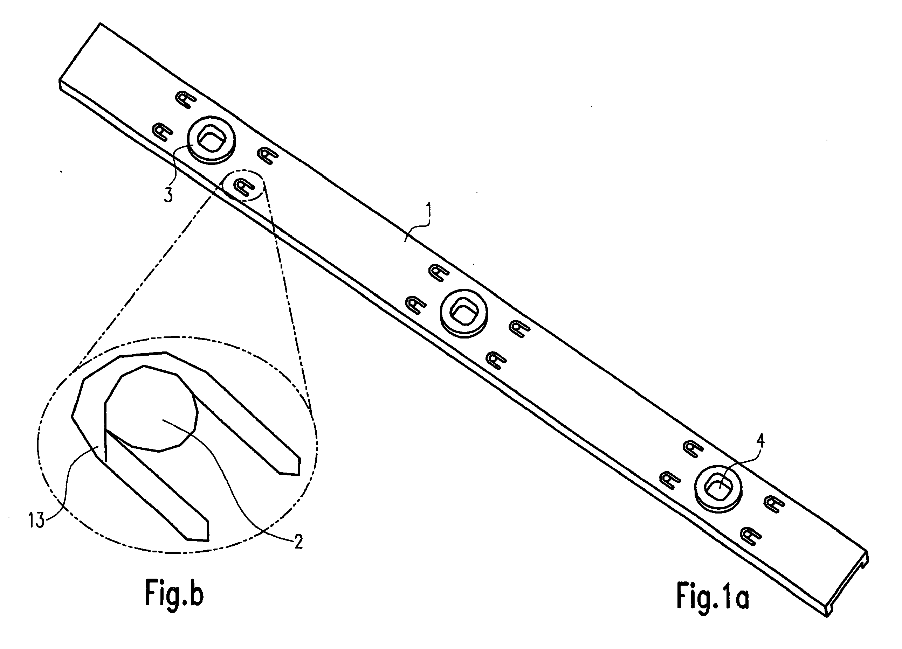

Fig. 1a zeigt das Halteelement 1 der erfindungsgemäßen Anordnung mit einer Sicht auf die Vorderseite. Das Halteelement 1 ist ein flächiges, längliches Element aus Kunststoff, kann aber auch aus anderen Materialien gefertigt werden. Randseitig stehen von der Rückseite des Halteelements 1 Ränder hervor, die dem Halteelement 1 im Querschnitt ein C-Profil und dadurch Stabilität gegen Biegung und Verdrehung verleihen. Die als Halteabschnitt bezeichnete Vorderseite des Halteelements 1 wird in einer Einbausituation des Bauteils 5 in Anlage an das Bauteil 5 gebracht. An der Vorderseite des Halteelements 1 sind eine Vielzahl von Abstandshaltern 3 mit mittigen Befestigungsdurchbrüchen 4 einstückig angeformt.

Die Abstandshalter 3 sind in Längsrichtung des Halteelements 1 hintereinander angeordnet und gleichmäßig voneinander beabstandet. Jeder Befestigungsdurchbruch 4 durchdringt das Material des Halteelements 1 vollständig. Die Abstandshalter 3 sind jeweils gleich hohe Bünde mit zylindrischer Außenkontur und mit in etwa dem doppelten Durchmesser der mittigen Befestigungsdurchbrüche 4. Um einen Abstandshalter 3 bzw. Befestigungsdurchbruch 4 sind jeweils vier Federzungen 2 durch U-förmige Schlitze 13 aus dem Material des Halteelements 1 freigeschnitten. Jeweils ein kugelförmiger Vorsprung 2a befindet sich am freien Ende einer Federzunge 2. Die Breite der Federzunge entspricht jeweils dem größten Durchmesser des integrierten, kugelförmigen Vorsprungs 2a. Über die kugelförmigen Vorsprünge 2a wird das Halteelement mit den am Bauteil 5 entsprechend vorgesehenen Aufnahmeabschnitten 7 formschlüssig in Eingriff gebracht. Der U-förmige Schlitz 13 um die Federzunge kann beliebig verlängert oder verkürzt werden, um die Federeigenschaften der freigeschnittenen Federzunge zu variieren. Fig. 1b zeigt eine vergrößerte Darstellung eines Eingriffsabschnitts, insbesondere den U-förmigen Schlitz 13 um die Federzunge und den kugelförmigen, integrierten Vorsprung 2a. Auf der Rückseite des Halteelements - an den Stellen, die den Federzungen entsprechen - ist Material abgetragen, um die Federeigenschaften der Federzungen zu bestimmen. Dabei entstehen die Aussparungen 10, deren Ausgestaltung beliebig variiert werden kann, um die Federeigenschaften der Federzungen zu bestimmen. Im Rahmen der Erfindung wird eine Federzunge mit dem kugelförmigen Vorsprung 2a an deren freiem Ende als Eingriffsabschnitt bezeichnet, der einen Teil einer Führungs- bzw. Verriegelungseinrichtung darstellt. In der Längsrichtung des Halteelements 1 sind jeweils zwei Eingriffsabschnitte auf gleicher Höhe nebeneinander angeordnet. In der Querrichtung des Halteelements 1 sind die Eingriffsabschnitte 2 jeweils in den äußeren, randseitigen Dritteln angeordnet. Die nebeneinanderliegenden Eingriffsabschnitte 2 weisen dabei die gleiche Ausrichtung in Bezug auf das Halteelement 1 auf. Die Federzungen erstrecken sich in der Längsrichtung des Halteelements 1, wobei die U-förmigen Schlitze 13 um die Federzungen sich jeweils zum gleichen längsseitigen Ende des Halteabschnitts 1 hin öffnen. Dabei erstrecken sich die Schenkel der Schlitze 13 parallel zu den Längsrandseiten des Halteelements 1.

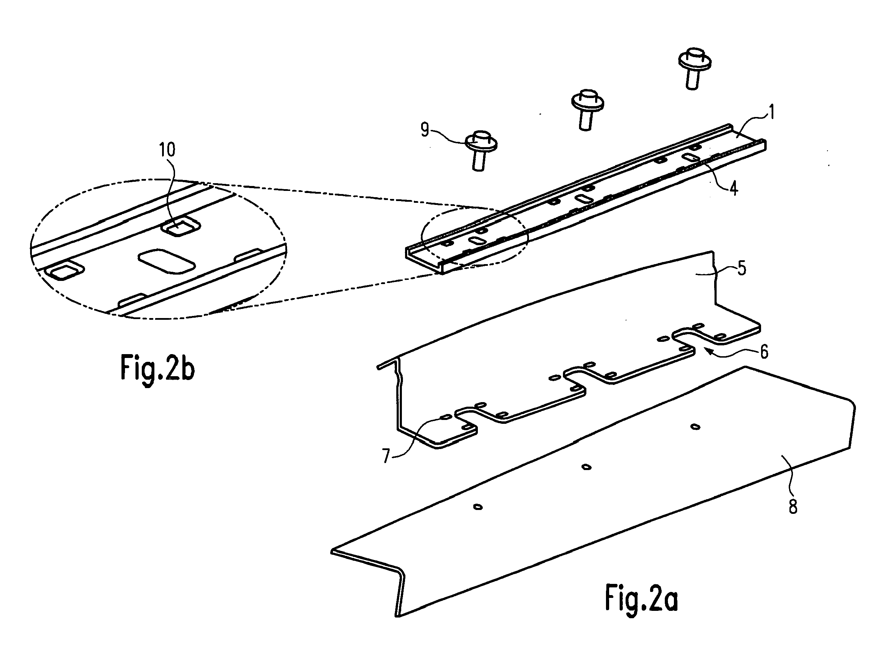

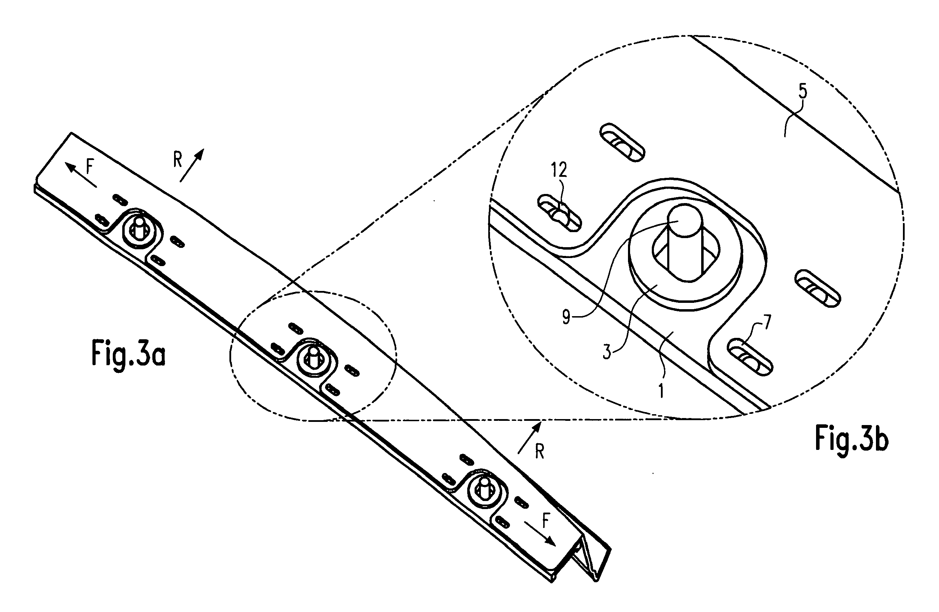

Nachstehend werden die Merkmale des in Fig. 2a, 3a und 3b zu sehenden Bauteils 5 beschrieben. Das Bauteil 5 ist vorzugsweise ein Teil einer Fahrzeugverkleidung und besitzt einen dünnwandigen, länglichen und flächigen Abschnitt, der in einem Spalt zwischen dem Halteelement 1 und dem Trägerelement 8 beweglich angeordnet ist.

Von einer Randseite des in den Spalt ragenden Abschnitts des Bauteils 5 sind Aussparungen 6 vorgesehen, deren Position, Größe und Abstand in Längsrichtung in Abhängigkeit von Position, Größe und Abstand der Abstandshalter 3 des Halteelements 1 bestimmt wird. Im Einbauzustand der Anordnung liegen die Abstandshalter 3 jeweils innerhalb der Aussparungen 6 des Bauteils 5, wie in Fig. 3b angedeutet ist. In der Längsrichtung des Bauteils 5 ist zwischen dem Bauteil 5 und den Abstandshaltern 3 jeweils vor und hinter den Abstandshaltern 3 Spiel vorgesehen, um ein Gleiten des Bauteils 5 über eine bestimmte Länge zu ermöglichen. Die Aussparungen 6 sind dabei im Wesentlichen halbkreis- oder bogenförmig und haben Durchmesser, die größer sind als die Durchmesser der Abstandshalter 3. In Längsrichtung des Bauteils 5, jeweils vor und hinter den Aussparungen 6, sind Führungsdurchbrüche 7 zur Aufnahme der kugelförmigen Vorsprünge 2a des Halteelements 1 vorgesehen und entsprechend in Übereinstimmung mit der Position der kugelförmigen Vorsprünge 2a angeordnet. Die Führungsdurchbrüche 7 sind als Nuten oder Langlöcher ausgebildet und erstrecken sich im Wesentlichen in Längsrichtung des länglichen, flächigen Abschnitts des Bauteils 5. Die Breite jedes dieser Langlöcher 7 ist geringer als der Durchmesser des kugelförmigen Vorsprungs 2a. Die Führungsdurchbrüche bzw. Langlöcher 7 werden im Rahmen der Erfindung als Aufnahmeabschnitte bezeichnet. Die Länge der Führungsdurchbrüche 7 kann im Rahmen der gegebenen Geometrie beliebig variiert werden, um der Anordnung ausreichend Spiel zu verleihen. Eines der um eine Aussparung 6 angeordneten Langlöcher 7 weist mittig eine Auskerbung 12 auf, wie in Fig. 3b dargestellt ist. Eine Führungseinrichtung im Sinne der Erfindung umfasst einen Eingriffsabschnitt bzw. die am freien Ende einer Federzunge angeordnete, kugelförmige Erhebung 2a auf Seiten des Halteelements 1 und einen Aufnahmeabschnitt, der als einfaches Langloch 7 (ohne Auskerbung) auf Seiten des Bauteils 5 ausgebildet ist, wobei der Eingriffsabschnitt und der Aufnahmeabschnitt miteinander in Eingriff stehen. Eine Führungs- und Verriegelungseinrichtung im Sinne der Erfindung ist eine zuvor genannte Führungseinrichtung, bei der das Langloch 7 des Aufnahmeabschnitts zusätzlich eine Auskerbung 12 aufweist. Drei Führungseinrichtungen sowie eine Führungs- und Verriegelungseinrichtung nach obiger Definition sind in Fig. 3B vergrößert dargestellt. Die Führungs- und Verriegelungseinrichtung mit Auskerbung 12 innerhalb des Langlochs 7 befindet sich in der Ansicht der Fig. 3b links unten. Die Auskerbung 12 ist derart gestaltet, um den kugelförmigen Vorsprung 2a des entsprechenden Eingriffsabschnitts des Halteelements 1 formschlüssig bezüglich allen Richtungen in der Führungsebene aufzunehmen.

Die Ränder der Auskerbung 12 beschreiben dabei Kreisbögen mit einem gemeinsamen Mittelpunkt auf der Mittelachse des Langlochs 7 und mit einem Durchmesser, der geringfügig kleiner ist als der Durchmesser des kugelförmigen Vorsprungs 2a, aber größer als die Breite des Langlochs 7. In der Normal- oder Neutralposition der Anordnung ist der Eingriffsabschnitt 2 des Halteelements 1 in der Auskerbung 12 verrastet und das Bauteil 5 ist zwischen dem Halteelement 1 und dem Trägerelement 8 festgelegt.

Nachstehend werden die Merkmale des in Fig. 2a zu sehenden Trägerelements 8 beschrieben. Das Trägerelement 8 ist ein längliches, flaches Bauteil, vorzugsweise ein dünnwandiges Kunststoff- oder Metallbauteil mit im Wesentlichen einem L-Profil, und weist in Längsrichtung eine Vielzahl von Bohrungen auf. Die Bohrungen sind auf die Befestigungsdurchbrüche 4 des Halteelements 1 abgestimmt, sind gleichmäßig voneinander beabstandet und liegen im Wesentlichen auf einer Linie; die Anzahl und die Lage der Bohrungen werden von den Befestigungsbegebenheiten des Bauteils 5 und dem verfügbaren Bauraum / der Einbausituation bestimmt. Die Bohrungen sind mit Innengewinden versehen, um die Schraubenbolzen 9 darin aufzunehmen. Das Trägerelement 8 ist vorzugsweise ein Element der Fahrzeugstruktur bzw. Karosserie.

Nachstehend wird die Verbindung zwischen dem Halteelement 1 und dem Trägerelement 8 mit Bezug auf Fig. 2a beschieben. Im Montagezustand der Anordnung sind das Halteelement 1 und das Trägerelement 8 durch die Schraubenbolzen 9 verbunden. Die zugewandten Seiten des Halteelements 1 und des Trägerelements 8 werden durch die Abstandshalter 3 beabstandet und parallel zueinander ausgerichtet. Zwischen dem Halteelement 1 und dem Trägerelement 8 bildet sich ein Spalt, in dem das Bauteil 5 beweglich angeordnet wird.

Nachstehend wird mit Bezug auf die Fig. 3a und 3b die Verbindung zwischen dem Halteelement 1 und dem Bauteil 5 beschrieben. Im Montagezustand der Anordnung ist das Bauteil 5 im Spalt zwischen dem Halteelement 1 und dem Trägerelement 8 angeordnet. Über die oben beschriebenen Führungs- und Verriegelungseinrichtungen ist das Halteelement 1 mit dem Bauteil 5 verbunden. Alternativ oder zusätzlich können zwischen dem Trägerelement 8 und dem Bauteil 5 Führungs- und/oder Verriegelungseinrichtungen vorgesehen sein.

Die bevorzugte Montage und bevorzugte Anwendung der erfindungsgemäßen Anordnung zum Befestigen eines Bauteils wird nachstehend mit Bezug auf die beiliegenden Zeichnungen ausführlich beschrieben.

Bei der Montage der Anordnung wird die mit den kugelförmigen Vorsprüngen 2 versehene Vorder- bzw. Oberseite des Halteelements 1 mit dem Bauteil 5 in Verbindung gebracht, so dass die Abstandshalter 3 des Halteelements 1 in den Aussparungen 6 des Bauteils 5 liegen. Die Schraubenbolzen 9 werden von der Rückseite des Halteelements 1 durch die Befestigungsdurchbrüche 4 des Halteelements 1 gesteckt. Der Durchmesser des Schraubenbolzens 9 ist deutlich kleiner als der Durchmesser des Befestigungsdurchbruchs 4, wodurch auftretende Montagetoleranzen ausgeglichen werden. Fig. 3a zeigt einen Vormontagezustand der Anordnung in einer Ansicht auf das bereits mit dem Halteelement 1 zusammengefügte Bauteil 5. Die Gewindeabschnitte der Schraubenbolzen 9 ragen durch die Befestigungsdurchbrüche 4 und die Abstandshalter 3 des Halteelements 1 hindurch. Fig. 3b zeigt eine vergrößerte Ansicht einer Verbindungsstelle, an der das Halteelement 1 und das Trägerelement 8 verbunden werden. Dort ist die Normal- oder Neutralposition der Anordnung angedeutet, in der die kugelförmigen Vorsprünge 2 jeweils mittig in den Langlöchern 7 angeordnet sind. Bei der Führungseinrichtung, die gleichzeitig eine Verriegelungseinrichtung aufweist, ist der kugelförmige Vorsprung 2 jeweils in der Aussparung 12 formschlüssig aufgenommen, wodurch das Bauteil 5 gegenüber dem Halteelement 1 festgelegt ist. Danach werden die Schraubenbolzen 9 in den vorgesehenen Bohrungen im Trägerelement 8 verschraubt, während das Bauteil 5 gegenüber dem Halteelement 1 weiterhin so ausgerichtet wird, dass die kugelförmigen Vorsprünge 2 mittig in den Langlöcher 7 des Bauteils 5 angeordnet sind.

Ist die erfindungsgemäße Anordnung montiert, und befindet sich die Anordnung in Normal-oder Neutralposition, so ist das Bauteil 5 gegenüber dem Halteelement 1 und dem Befestigungselement 8 festgelegt und verriegelt. Dabei greift ein Vorsprung 2 in die Auskerbung 12 ein. Dieser Zustand wird auch als erster Zustand bezeichnet. Bei definierter Krafteinwirkung in Führungsrichtung, z.B. hervorgerufen durch Wärmeausdehnung oder bei einem Crash mit niedriger Geschwindigkeit, wird die Anordnung vom ersten Zustand, in dem das Bauteil 5 gegenüber dem Halteelement 1 und dem Trägerelement 8 festgelegt ist, in einen zweiten Zustand, in dem das Bauteil zwischen dem Halteelement 1 und dem Trägerelement 8 gleitend geführt wird, reversibel überführt. Dies geschieht dadurch, dass der nachgiebige Eingriffsabschnitt nachgibt und der kugelförmige Vorsprung 2 von der Auskerbung 12 in die Längsnut 7 gleitet.

Die Federzunge wird dabei geringfügig verformt und ins Innere des Halteelements 1 gedrückt. Da die Aussparungen 10 auf der Rückseite des Halteelements 1 vorgesehen sind, sind die kugelförmigen Vorsprünge 2 an den Enden der Federzungen in das Halteelement 1 eindrückbar. Bei einer entsprechenden Bewegung des Bauteils 5 gegenüber dem Halteelement 1 bzw. dem Trägerelement 8 entgegen der Auslenkrichtung, kann die Anordnung wieder vom zweiten in den ersten Zustand überführt werden.

Bei einer erheblichen Krafteinwirkung in der Führungsebene, d.h. in Führungsrichtung F oder quer dazu, werden die Federzungen mit angeformten kugelförmigen Vorsprüngen 2 derart verformt, dass die kugelförmigen Vorsprünge 2 aus den Führungsdurchbrüchen 7 gleiten und die Eingriffsabschnitte außer Eingriff mit den Aufnahmeabschnitten gebracht werden. In diesem Zustand ist das Bauteil 5 ungeführt und kann in einer Richtung R senkrecht zur Führungsrichtung F seitlich aus der Anordnung entnommen werden. Die Eingriffsabschnitte bzw. Federzungen mit kugelförmigen Vorsprüngen 2 erleiden dabei jedoch keinen Schaden. Wenn das Bauteil entgegen der Richtung R wieder in den Spalt zwischen dem flächigen Halteabschnitt 1 und dem flächigen Trägerabschnitt 8 eingesetzt wird, können die Eingriffsabschnitte wieder in Eingriff mit den Aufnahmeabschnitten gebracht werden, um das Bauteil 5 in Führungsrichtung F gleitend zu führen.

## Patentansprüche

1. Anordnung zum Befestigen eines Bauteils (5) umfassend:
ein Trägerelement (8) und
ein fest mit dem Trägerelement (8) verbundenes Halteelement (1),
zumindest einen Abstandshalter (3), durch den das Trägerelement (8) und das Halteelement (1) voneinander beabstandet sind,
wobei das Bauteil (5) beweglich zwischen dem Trägerelement (8) und dem Halteelement (1) angeordnet ist und durch zumindest eine Führungseinrichtung in einer Führungsebene geführt wird, und wobei die Führungseinrichtung wenigstens einen Eingriffsabschnitt (2) und wenigstens einen Aufnahmeabschnitt (7) umfasst, die miteinander in Eingriff stehen, **dadurch gekennzeichnet, dass** der Eingriffsabschnitt (2) nachgiebig ist durch gezielte Krafteinwirkung in der Führungsebene mit dem Aufnahmeabschnitt (7) reversibel außer Eingriff bringbar ist.

2. Anordnung nach Anspruch 1,
**dadurch gekennzeichnet,**
**dass** die Anordnung eine Verriegelungseinrichtung aufweist, durch welche das Bauteil (5) zwischen dem Trägerelement (8) und dem Halteelement (1) reversibel festlegbar ist.

3. Anordnung nach Anspruch 1 oder 2, **dadurch gekennzeichnet, dass** die Anordnung von einem ersten Zustand, in dem das Bauteil (5) zwischen dem Halteelement (1) und dem Trägerelement (8) festgelegt ist, in einen zweiten Zustand, in dem das Bauteil (5) gegenüber dem Halteelement (1) bzw. dem Trägerelement (8) bewegbar ist und in zumindest einer Führungsrichtung (F) gleitend geführt wird, reversibel überführbar ist.

4. Anordnung nach zumindest einem der vorangegangenen Ansprüche, **dadurch gekennzeichnet, dass** die Anordnung durch definierte Krafteinwirkung in einer Führungsrichtung (F), die kleiner ist als die Kraft zum außer Eingriff bringen des Eingriffsabschnitts (2) und des Aufnahmeabschnitts (7), vom ersten in den zweiten Zustand überführbar ist.

5. Anordnung nach zumindest einem der vorangegangenen Ansprüche, **dadurch gekennzeichnet, dass** der Eingriffsabschnitt (2) einstückig am Halteelement (1) oder dem Trägerelement (8) angeformt ist.

6. Anordnung nach zumindest einem der vorangegangenen Ansprüche, **dadurch gekennzeichnet, dass** das Bauteil (5) mit dem Halteelement (1) und/oder dem Trägerelement (8) formschlüssig verbunden ist.

7. Anordnung nach zumindest einem der vorangegangenen Ansprüche, **dadurch gekennzeichnet, dass** der Eingriffsabschnitt (2) einen Vorsprung umfasst, der in eine Ausnehmung (7) des Aufnahmeabschnitts eingreift.

8. Anordnung nach zumindest einem der vorangegangenen Ansprüche, **dadurch gekennzeichnet, dass** der Eingriffsabschnitt (2) eine Federzunge (2) umfasst.

9. Anordnung nach zumindest einem der vorangegangenen Ansprüche, **dadurch gekennzeichnet, dass** sich die Federzunge (2) im Wesentlichen in einer Führungsrichtung (F) erstreckt.

10. Anordnung nach zumindest einem der vorangegangenen Ansprüche, **dadurch gekennzeichnet, dass** zumindest eine Führungseinrichtung eine Verriegelungseinrichtung umfasst.

11. Anordnung nach zumindest einem der vorangegangenen Ansprüche, **dadurch gekennzeichnet, dass** die Verriegelungseinrichtung eine Rastvorrichtung (12) aufweist, in welcher der Eingriffsabschnitt (2) verrastbar ist.

12. Anordnung nach zumindest einem der vorangegangenen Ansprüche, **dadurch gekennzeichnet, dass** der Eingriffsabschnitt (2) im ersten Zustand der Anordnung in der Rastvorrichtung (12) der Verriegelungseinrichtung verrastet ist, und im zweiten Zustand der Anordnung im Aufnahmeabschnitt (7) der Führungseinrichtung in zumindest einer Führungsrichtung (F) gleitend geführt wird.

13. Anordnung nach zumindest einem der vorangegangenen Ansprüche, **dadurch gekennzeichnet, dass** der Aufnahmeabschnitt eine Nut (7) oder Langloch aufweist.

14. Anordnung nach zumindest einem der vorangegangenen Ansprüche, **dadurch gekennzeichnet, dass** die Rastvorrichtung eine Auskerbung (12) umfasst.

15. Anordnung nach zumindest einem der vorangegangenen Ansprüche, **dadurch gekennzeichnet, dass** die Auskerbung (12) die Nut (7) oder das Langloch unterbricht.

16. Anordnung nach zumindest einem der vorangegangenen Ansprüche, **dadurch gekennzeichnet, dass** das Halteelement (1) einen länglichen und dünnwandigen Abschnitt umfasst.

17. Anordnung nach zumindest einem der vorangegangenen Ansprüche, **dadurch gekennzeichnet, dass** das Halteelement (1) an zumindest zwei Verbindungsstellen mit dem Trägerelement (8) verbunden ist.

18. Anordnung nach zumindest einem der vorangegangenen Ansprüche, **dadurch gekennzeichnet, dass** zumindest zwei Führungseinrichtungen vorgesehen sind, die im Wesentlichen in einer Führungsrichtung (F) des Bauteils (5) voneinander beabstandet sind.

19. Anordnung nach zumindest einem der vorangegangenen Ansprüche, **dadurch gekennzeichnet, dass** an einer Verbindungsstelle, an der das Halteelement (1) und das Trägerelement (8) miteinander verbunden sind, zumindest eine Führungseinrichtung vorgesehen ist, die eine Verriegelungseinrichtung umfasst.

20. Anordnung nach zumindest einem der vorangegangenen Ansprüche, **dadurch gekennzeichnet, dass** das Bauteil (5), wenn der Eingriffsabschnitt (2) außer Eingriff mit dem Aufnahmeabschnitt (7) ist, in einer Richtung (R) im Wesentlichen senkrecht zu einer Führungsrichtung (F) aus der Anordnung entfernbar ist.

21. Anordnung nach zumindest einem der vorangegangenen Ansprüche, **dadurch gekennzeichnet, dass** das Halteelement (1) einen flächigen Halteabschnitt und das Trägerelement (8) einen flächigen Trägerabschnitt aufweisen, die durch den Abstandshalter (3) voneinander beabstandet in etwa parallel gegenüberstehen und einen Spalt bilden, wobei ein dünnwandiger Führungsabschnitt des Bauteils (5) in den Spalt zwischen dem Halteabschnitt und dem Trägerabschnitt hineinragt.

22. Anordnung nach zumindest einem der vorangegangenen Ansprüche, **dadurch gekennzeichnet, dass** die Führungsrichtung (F) des Bauteils (5) im Wesentlichen parallel zu dem Halteabschnitt und/oder dem Trägerabschnitt verläuft.

23. Anordnung nach zumindest einem der vorangegangenen Ansprüche, **dadurch gekennzeichnet, dass** die Führungsrichtung (F) des Bauteils (5) im Wesentlichen die Richtung ist, in der zwei Verbindungsstellen des Halteelements (1) und des Trägerelements (8) voneinander beabstandet sind.
